# EUROPEAN PATENT SPECIFICATION

(11) **EP 2 325 049 B1**
(45) Date of publication and mention of the grant of the patent: **21.03.2012**
(21) Application number: 09460052.5
(22) Date of filing: 23.11.2009
(51) Int. Cl.: B60R 11/02

(54) **A mobile phone holder with lateral connectors**
Mobiltelefonhalter mit seitlichen Anschlüssen
Support de téléphone mobile doté de connexions latérales

(43) Date of publication of application: 25.05.2011
(73) Proprietor: BURY Sp. z o.o., 39-300 Mielec (PL)
(72) Inventor: Kramza, Pawel, 36-055 Bratkowice 55c (PL)
(74) Representative: Kaminski, Zbigniew

(56) References cited:
- EP-A1- 2 080 672
- EP-A2- 1 835 706
- DE-A1-102007 054 451

## Description

This invention relates to a mobile phone holder with lateral power and / or signal connectors, especially for a mechanical vehicle, provided with a casing, which consists of a base, a cover, and a slide slideably mounted in the casing and connected with a release button protruding from the casing, wherein the jacket of a lateral plug is slideably mounted in a hole in the cover.

Recently, mobile phones with connectors, both power and signal ones, located on lateral walls have been used more often. Such arrangement is a result of efforts to minimize a phone size and to utilize its all surfaces.

German patent application DE 10 2004 062 178 B4 discloses a universal holder, especially for mobile phones, provided with a hands-free device located within a casing of the holder and with a charger located in a jacket of a plug, the holder having two USB plugs adapted to engage with a slot located on a lateral wall of the holder. The plug of the charger is connected, by means of a cable on its other side, to a power plug of the mobile phone; the power plug being inserted manually in a power supply socket of the phone in a lateral or lower portion of the phone. The holder is universal and provided with movable lateral walls and an upper wall, which enables adjusting a size of a cavity between these walls to various sizes of mobile phones.

A major inconvenience of the holder design as described above is that the plug has to be inserted manually after the mobile phone had been placed in the holder.

European patent application No. EP 1 821 501 A1 discloses a holder for electronic devices, which consists of a base and a swinging cover connected to the base and adapted to set a body of the electronic device in place. The cover is elevated around a lateral wall of the base and parallel to its longitudinal axis. In its initial position the cover is inclined to a plane of the base, whereas once an electronic device, especially a mobile phone, is inserted, the cover is rotated, pressed against the base and locked in this position by means of a lateral snap catch. On the lateral wall, across which a rotation axis of the cover passes, there is a plurality of fixed power and signal connectors, which are adapted to enter into corresponding slots in the lateral wall of the electronic device being locked in the holder.

The cover with the electronic device resting in it is released by means of a slideable button located in an upper portion of the base and provided with a protrusion adapted to push and release the catch of the cover, which is pressed by a flat profiled spring making the cover swing in the outward direction from the base.

International patent application No. WO 20091021601 A1 discloses a mobile phone holder, especially for a mechanical vehicle, which consists of an immovable base and an insert to be placed in the base, the insert forming a cradle to accommodate a mobile phone. An oblong wall of the insert is inclined in relation to lateral walls of the base and connected movably with transverse walls of the insert. This movable wall is provided with a plurality of power and signal connectors, therefore, pushing it out results in moving a plug in a horizontal direction and entering into a corresponding slot in the insert of the mobile phone. When the oblong walls are pressed and, consequently, a plug connected to one of these walls is inserted into the slot of the mobile phone. Then the oblong walls are blocked in their as-pressed position by catches located in the base. Unlocking the oblong walls is performed by pressing a button, which moves the blocking catches and, as a result, the oblong walls move upwards under the force of springs.

A major inconvenience of all mobile phone holders with lateral connectors, as described above, is the use of various inserts, covers or movable walls, which protrude from the base and are often damaged as a result of an incorrect inserting a mobile phone into the holder. Moreover, external movable parts of such holders are exposed to accumulation of dirt and subsequent failures of the holder operation.

European patent application EP 2 080 672 A1 discloses a mobile phone holder with lateral connectors, especially for mechanical vehicles, provided with a casing, which consists of a base, a cover, and a slide, slideably mounted in the casing and having a cavity to accommodate a mobile phone, and a releasing unit with lateral buttons connected to an eccentric wheel. The holder is provided with a power plug and, if needed, with signal plugs slideably mounted in guides in the base, inclined to an axis of the holder, and in relevant guides in the cover, while a jacket of the plug is provided with a protrusion slideably mounted in a guide of the slide and adapted to gradually push the plug out while the mobile phone is being inserted into the cavity in the slide. In its as-pressed position the slide is fixed by means of an elastic catch, which catches an upper edge of the mobile phone. The releasing unit, which releases the slide, is provided with a slotted hole, in which a pin, slideably mounted in the hole, is guided. The pin, when pressed, is adapted to release an end portion of a body of the releasing unit and, subsequently, to enable a movement of the slide into its as-released position.

An inconvenience of this holder is that the slide, with a mobile phone resting in it, has to be moved downwards manually in order to lock it and to place the plug into a lateral slot of the phone.

European patent application No. EP 1 835 706 A2 discloses a portable telephone holder comprising a housing and a drawer, which is rotatably connected within the housing by means of a rider. One end of the rider is connected with the drawer, while another end is seated within a hinge at the bottom wall of the housing. The rider has a sliding shoulder, which slides within a guiding rail under the bottom of the drawer and cooperates with a spring mechanism allowing the drawer with the telephone to rotate out of the housing. The drawer can be snapped in the housing and released for rotation by means of an unlocking button. The drawer has an electrical plug, which is connected with a connector in the housing by means of a cable.

German patent application No. DE 10 2007 054 451 A1 relates to holder for a mobile phone. The holder has a base body and a carrier, within which the mobile phone retains. The carrier is movable within the base body between a holding position and a releasing position. The carrier has an interface, which moves between two positions as the carrier moves between holding and releasing positions.

An object of this invention is to provide a mobile phone holder, especially for a mechanical vehicle, which is adapted to accommodate a mobile phone in its operable position in the holder with one move of a hand pressing the mobile phone down into a cavity of a holder cover, which results in the phone being automatically locked and a lateral plug being pushed and entered into a slot of the phone.

A mobile phone holder according to the invention is defined in Claim 1.

Preferably, the guiding plate, mounted to the cover and having a guiding surface, is provided with: a first recessed part with protrusions, which serve as bearings to the hooked catches being mounted in these protrusions in a tiltable manner; a second recessed part having guiding surfaces that are adapted to guide the release button; and a hole, in which the first compression coil spring is mounted.

Advantageously, on one side of the hole in the guiding plate there is provided a pin, onto which one end of the first compression coil spring is put, whereas on the opposite side of the hole in the slide there is another pin, onto which the other end of that spring is put.

The jacket of the lateral plug is preferably connected with the slide by means of an arm.

An axis of the hole in the slide overlaps favourably with an axis of the release button protruding from the lateral side of the slide.

It is preferred that the cover is provided in its lower part with a surrounding projection, which left portion is extended and provided with a hole, within which the jacket of the lateral plug is guided.

Desirably, the cover is provided in its upper part with slotted holes, through which the hooked catches pass.

Preferably, an upper part of the jacket of the lateral plug is guided in the hole in the left portion of the surrounding projection, whereas a lower part of the jacket of the lateral plug is guided in a notch in a lateral wall of the base.

Performance tests of the mobile phone holder with a lateral power and / or signal connector according to the invention proved, that operation of the holder, in particular placing a mobile phone in its operable position, is much simpler, as compared with other solutions known in the state of the art, and requires only one move of one hand. Also, an enclosed form of the holder, without movable parts inside, increases its performance reliability and resistance to dirt.

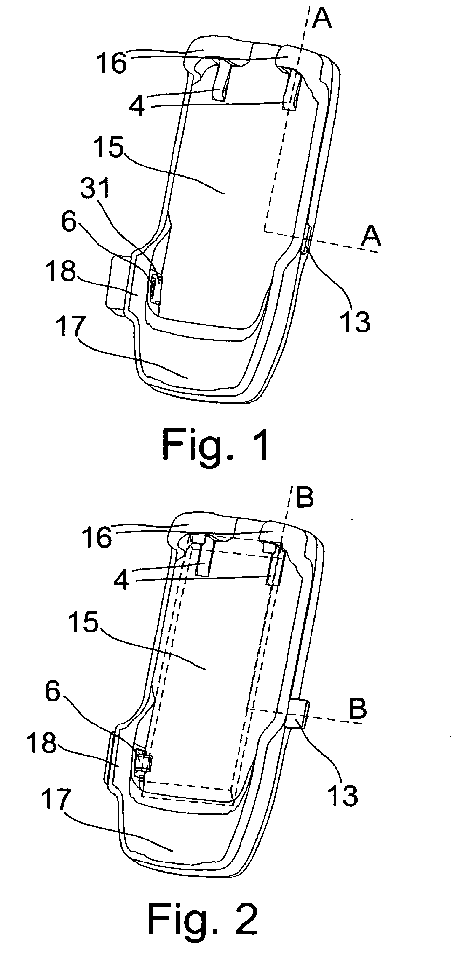

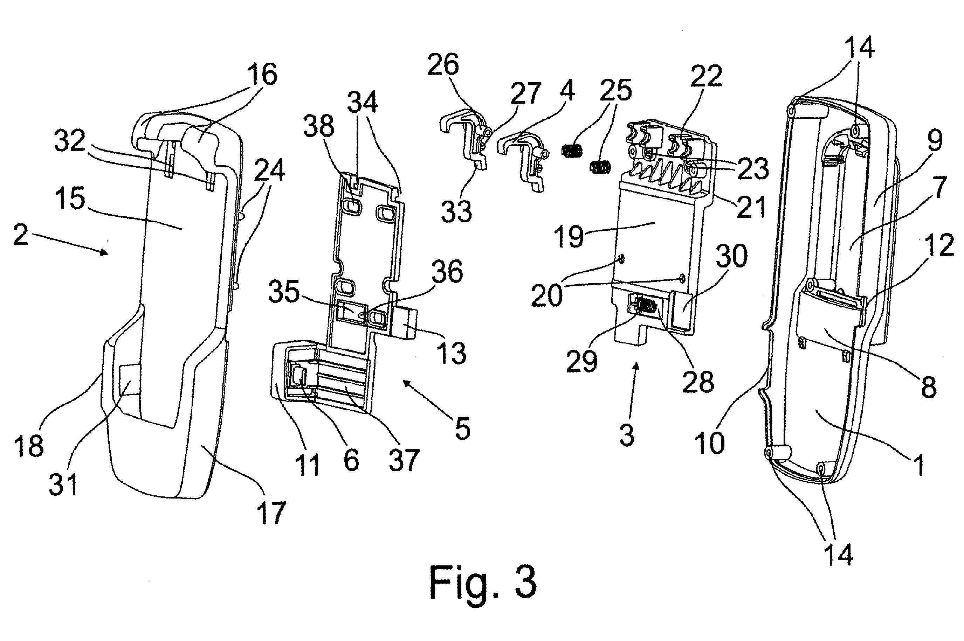

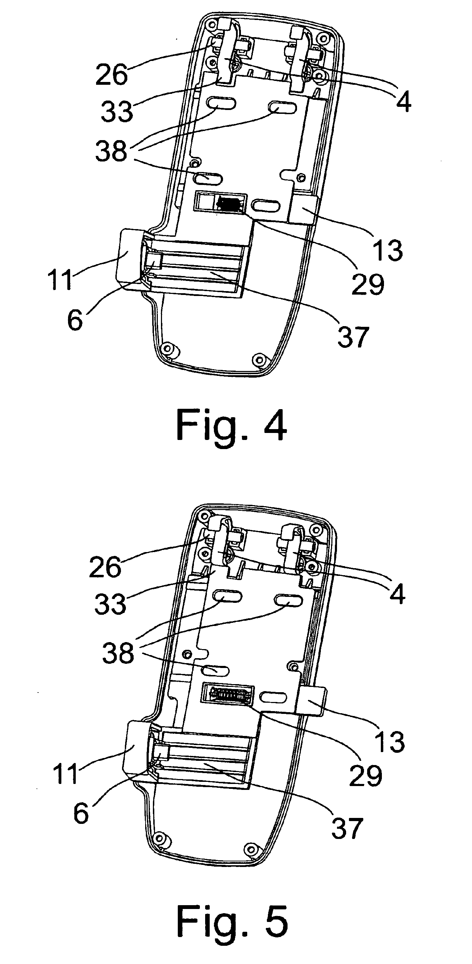

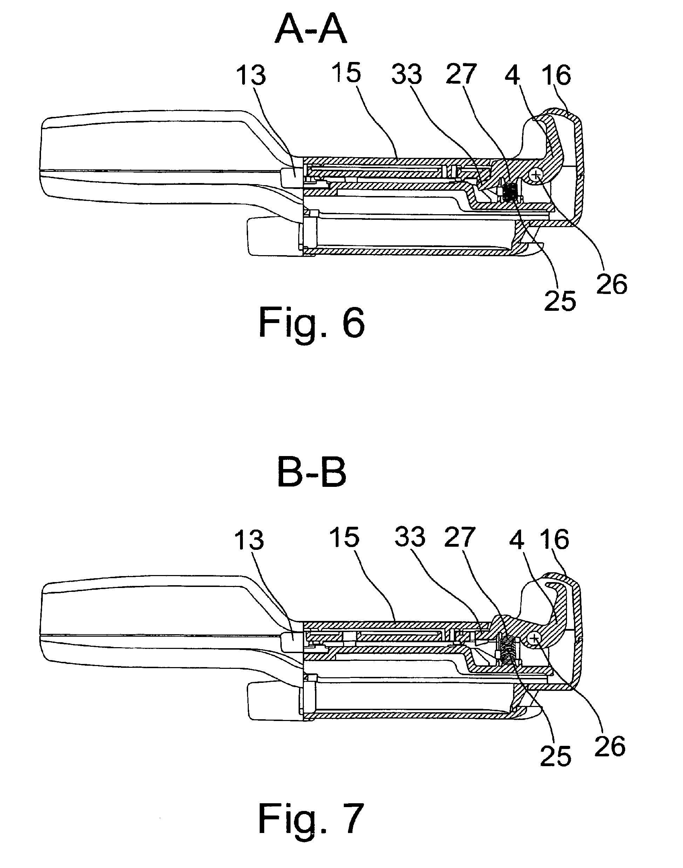

A mobile phone holder with lateral power and / or signal connectors according to the invention will now be presented with reference to the accompanying drawings, in which: **Fig. 1** is a perspective view of the holder fixed within a vehicle in an as-released position; **Fig. 2** is a perspective view of the holder with a mobile phone (indicated by a dashed line) resting in the holder; **Fig. 3** is an exploded view of the holder; **Fig. 4** is a perspective view of the holder in the as-released position with a cover removed; **Fig. 5** is a perspective view of the holder in an as-locked position with the cover removed; **Fig. 6** is a view of a cross-section of the holder taken along the line A-A of Fig. 1; and **Fig. 7** is a view of a cross-section of the holder taken along the line B-B of Fig. 1.

A mobile phone holder with lateral connectors, especially for a mechanical vehicle, as depicted in the Figs. 1 - 3, consists of the following components: a base **1**, a cover **2**, and a guiding plate **3** placed between them, mounted to the cover **2** and provided with at least one hooked catch **4**, tiltably mounted in it. Moreover, the holder includes a slide **5**, which is slideably mounted between the cover **2** and the guiding plate **3** and provided with a lateral plug **6** that is adapted to engage with a slot of the lateral connector of a mobile phone.

The base **1**, fixed immovably to a dashboard of the mechanical vehicle, has a boat-like shape, when seen in a front view, and is provided in its bottom, with a rectangular cavity **7**, which is open at the bottom and adapted to accommodate a plate, not depicted in the drawings, with an electronic circuit including a charger, a hands-free module, a Bluetooth and/or other electronic modules. To fix the plate with electronic circuits a lid **8**, connected to the base **1**, is used. Lateral walls **9** of the base **1** are provided with a notch **10** to guide a jacket **11** of a lateral plug **6** and a notch **12** to guide a release button **13**, which releases the slide **5**. Also, the base **1** is provided with projections having threaded holes **14** for screws, which connect it with the cover **2.**

The cover **2** has the shape of a plate, which external surface **15** is limited from the top by upper projections **16** and from the bottom by a surrounding projection **17**. A left portion **18** of the surrounding projection **17** forms a cavity with a hole **31**, in which the jacket **11** of the lateral plug **6** is slideably mounted. The cover **2** is also provided in its upper portion with slotted holes **32**, through which the hooked catches **4** pass and thus protrude from the cover **2.**

The guiding plate **3** has a rectangular guiding surface **19** with holes **20** to mount it to the cover **2**, and also a first recessed part **21** with bearing protrusions **22**, in which the hooked catches **4** are tiltably mounted. In this first recessed part **21** there are also additional supporting protrusions **23,** in which one end of compression coils springs **25** is placed.

The hooked catches **4**, when seen in a side view, have a shape of hooks provided in their central portion with lateral shafts **26,** which are tiltably mounted in the bearing protrusions **22**, and with lower protrusions **27**, on which other ends of the compression coil springs **25** are mounted. The hooked catches **4** are provided in their lower ends with blocking protrusions **33**, which are adapted to enter into blocking notches **34** in the slide **5**. In a lower portion of the guiding plate **3** there is a hole **28**, in which the first compression coil spring **29** is mounted, and a second recessed part **30**, which is adapted to guide the release button **13**. The slide 5 has the shape of a plate provided in its upper portion with two blocking notches **34,** which are adapted to engage with blocking protrusions **33** of the hooked catches **4**. In its central portion the slide **5** is provided with a rectangular hole **35** with a pin **36**, onto which the other end of the first compression coil spring **29** is put, and also with the release button **13** protruding from the slide **5**.

In its lower portion the slide **5** is provided with an arm **37** with the jacket **11** of the lateral plug **6**. The slide **5** is also provided with four slotted holes 38, which are adapted to engage with guiding protrusions **24** on an internal surface of the cover **2**. These protrusions limit the crosswise movement of the slide **5** in the holder.

The mobile phone holder, as described above, operates as follows.

In the as-released position (Fig. 1) the slide **5** is in its leftmost position where the jacket **11** of the lateral plug **6** protrudes from the hole **31**. The release button **13** is hidden inside the casing of the holder and the first compression coil spring **29** is compressed. While the mobile phone is being inserted into the cavity in the cover **2**, its upper edge presses the hooked catches **4** protruding from the cover **2** and makes them move. As a result the blocking protrusions **33** leave the blocking notches **34** and release the slide **5**. The first compression coil spring **29** moves the slide **5** with the lateral plug **6** rightwards, that is in a crosswise direction, which results in that the lateral plug **6** enters a slot in the mobile phone. At the same time, the hooked catches grab and lock the mobile phone in its resting position pressing it down to the cavity in the cover **2.** The phone is then in its locked operable position (Fig. 2) and it is not possible to remove it.

In order to release the phone and to remove it from the holder, the release button **13** is pressed, which moves the slide **5** leftwards. At the same time the lateral plug **6** leaves the slot of the mobile phone and the phone may be removed from the cover **2**. When the mobile phone is removed, all movable components of the holder return to their initial position (Fig. 1).

The advantage of the holder, according to the invention, is that it cannot be removed from the holder in the as-locked position, where it is additionally blocked by the lateral plug **6**, which sits in the phone's slot.

The invention is not limited to the embodiments presented above, but also includes any modifications thereof such that these modifications are consistent with the idea of the invention.

### Reference numbers

- 1: base
- 2: cover
- 3: guiding plate
- 4: hooked catch
- 5: slide
- 6: lateral plug
- 7: cavity in the base 1
- 8: lid fixing the plate with an electronic circuit in the base 1
- 9: lateral walls of the base 1
- 10: notch in the lateral wall 9
- 11: jacket of the lateral plug 6
- 12: notch for a releasing button 13
- 13: releasing button
- 14: projections with a threaded hole
- 15: external surface of the cover 2, which forms a cavity for a mobile phone
- 16: upper projections of the cover 2
- 17: surrounding projection of the cover 2
- 18: left portion of the surrounding projection 17
- 19: a guiding surface of the guiding plate 3
- 20: holes in the guiding plate 3 for screws
- 21: first recessed part of the guiding plate 3
- 22: bearing protrusions of the guiding plate 3
- 23: supporting protrusions of the guiding plate 3
- 24: guiding protrusions on the internal surface of the cover 2
- 25: compression coil springs of the hooked catches 4
- 26: lateral shafts of the hooked catches 4
- 27: lower protrusions of the hooked catches 4 for the compression coil springs 25
- 28: hole in the guiding plate 3 for the first compression coil spring 29
- 29: first compression coil spring
- 30: second recessed part to guide the releasing button 13
- 31: hole in the left portion 18 of the surrounding projection 17 of the cover 2
- 32: slotted holes in the cover 2 for hooked catches 4
- 33: blocking protrusions of the hooked catches 4
- 34: blocking notches of the slide 5
- 35: hole in the slide 5 for the first compression coil spring 29
- 36: pin for the first compression coil spring 29
- 37: arm connecting the sidle 5 with the jacket 11
- 38: slotted holes in the slide 5 engaging with the guiding protrusions 24 of the cover 2

## Claims

1. A mobile phone holder with lateral power and / or signal connectors, especially for a mechanical vehicle, provided with a casing, which consists of:
- a base (**1**),
- a cover (**2**),
- a slide (**5**) slideably mounted in the casing and connected with a release button (**13**) protruding from the casing, and with a jacket (**11**) of a lateral power and / or signal plug (**6**), wherein the jacket (**11**) is slideably mounted in a hole (**31**) in the cover (**2**),
**characterized in that** the slide (**5**)
is slideably mounted in a perpendicular direction to the axis of the holder, between the internal surface of the cover (**2**) and a flat guiding surface (**19**) of a guiding plate (**3**),
is connected with the jacket (**11**) of the lateral power and / or signal plug (**6**),
is provided with blocking notches (**34**), which are adapted to engage with blocking protrusions (**33**) of hooked catches (**4**) mounted in a tiltable manner in bearing protrusions (**22**) of the guiding plate (**3**),
is provided with a hole (**35**), in which a first compression coil spring (**29**) is mounted,
and **in that** the release button (**13**) is protruding from a side, which is opposite to the jacket (**11**).

2. The holder according to Claim 1, **characterized in that** the guiding plate (**3**), mounted to the cover (**2**) and having a guiding surface (**19**), is provided with:
a first recessed part (**21**) with protrusions (**22**), which serve as bearings to the hooked catches (**4**) being mounted in these protrusions (**22**) in a tiltable manner,
a second recessed part (**30**) having guiding surfaces that are adapted to guide the release button (**13**), and
a hole (**28**), in which the first compression coil spring (**29**) is mounted.

3. The holder according to Claim 1 or 2, **characterized in that** on one side of the hole (**28**) in the guiding plate (**3**) there is provided a pin, onto which one end of the first compression coil spring (**29**) is put, whereas on the opposite side of the hole (**35**) in the slide (**5**) there is another pin (**36**), onto which the other end of that spring (**29**) is put.

4. The holder according to Claim 1, **characterized in that** the jacket (**11**) of the lateral plug (**6**) is connected with the slide (**5**) by means of an arm (**37**).

5. The holder according to Claim 1, **characterized in that** an axis of the hole (**35**) in the slide (**5**) overlaps with an axis of the release button (**13**).

6. The holder according to Claim 1, **characterized in that** the cover (**2**) is provided in its lower part with a surrounding projection (**17**), which left portion (**18**) is extended and provided with a hole (**31**), within which the jacket (11) of the lateral plug (**6**) is guided.

7. The holder according to Claim 1, **characterized in that** the cover (**2**) is provided in its upper part with slotted holes (**32**), through which the hooked catches (**4**) pass.

8. The holder according to the Claim 6, **characterized in that** an upper part of the jacket (**11**) of the lateral plug (**6**) is guided in the hole (**31**) in the left portion (**18**) of the surrounding projection (**17**), whereas its lower part in a notch (**10**) in a lateral wall (**9**) of the base (**1**).

## Patentansprüche

1. Mobiltelefonhalterung mit seitlichen Versorgungs- und/oder Signalanschlüssen, insbesondere für Kraftwagen, mit einem Gehäuse bestehend aus den folgenden Komponenten:
- Grundkörper (**1**),
- Deckel (**2**),
- Schieber (5), der im Grundkörper verschiebbar gelagert und mit dem aus dem Gehäuse (**11**) herausragenden Freigabetaster (**13**) und dem Gehäuse des seitlichen Versorgungs- und/oder Signalkontakt (**6**) verbunden ist, wobei das Gehäuse (**11**) verschiebbar in der Öffnung (**31**) des Deckels (**2**) gelagert ist,
**gekennzeichnet dadurch, dass** der Schieber (**5**)
verschiebbar quer zur Halterungsachse zwischen der Innenfläche des Deckels (**2**) und der flachen Führungsfläche (**19**) der Führungsplatte (**3**) gelagert ist,
mit dem Gehäuse (**11**) des seitlichen Versorgungs- oder Signalkontakts (**6**) verbunden ist,
über Verriegelungsaussparungen (**34**) verfügt, die zu den Vorsprüngen (**33**) der Haken (**4**) passen, die schwenkbar in Lagervorsprüngen (**22**) der Führungsplatte (**3**) gelagert sind ,
mit der Öffnung (**35**) verfügt, in welcher die erste Schraubenspreizfeder (**29**) gelagert ist,
sowie **dadurch**, dass der Freigabetaster (**13**) auf der gegenüberliegenden Seite des Gehäuses (**11**) herausragt.

2. Halterung nach Anspruch 1, **gekennzeichnet dadurch, dass** die Führungsplatte (**3**), die am Deckel (**2**) befestigt ist und über eine flache Führungsfläche (**19**) verfügt, mit folgenden Bauteilen ausgerüstet ist:
der erste, abgesetzte Teil (**21**) mit Vorsprüngen (**22**), welche als Lagerungen der Haken (**4**) funktionieren, die in diesen Vorsprüngen (**22**) schwenkbar gelagert sind,
der zweite abgesetzte Teil (**30**), dessen Führungsflächen zur Führung des Freigabetasters (**13**) geeignet sind sowie
Öffnung (**28**), in welchem die erste Schraubenspreizfeder (**29**) gelagert ist.

3. Halterung nach Anspruch 1 oder 2, **gekennzeichnet dadurch, dass** auf einer Seite der Öffnung (**28**) der Führungsplatte (**3**) sich ein Stift befindet, an welchem ein Ende der ersten Schraubenspreizfeder (**29**) gelagert ist, wobei auf der anderen Seite der Öffnung (**35**) des Schiebers (**5**) sich der andere Stift (**36**) befindet, an welchem das andere Ende dieser Feder befestigt ist (**29**).

4. Halterung nach Anspruch 1, **gekennzeichnet dadurch, dass** das Gehäuse (**11**) des seitlichen Kontakts (**6**) mit dem Schieber (**5**) über einen Arm (**37**) verbunden ist.

5. Halterung nach Anspruch 1, **gekennzeichnet dadurch, dass** die Achse der Öffnung (**35**) des Schiebers (**5**) mit der Achse des Freigabetasters (**13**) übereinstimmt.

6. Halterung nach Anspruch 1, **gekennzeichnet dadurch, dass** der Deckel (**2**) in seinem unteren Bereich über einen umlaufenden Vorsprung (**17**) verfügt, dessen linker Teil (**18**) breiter ist und über eine Öffnung (**31**) verfügt, in welcher das Gehäuse (**11**) des seitlichen Kontakts (**6**) geführt wird.

7. Halterung nach Anspruch 1, **gekennzeichnet dadurch, dass** der Deckel (**2**) in seinem oberen Bereich über Schlitzöffnungen (**32**) verfügt, in welchen die Haken (**4**) gesteckt sind

8. Halterung nach Anspruch 6, **gekennzeichnet dadurch, dass** der obere Bereich des Gehäuses (**11**) des seitlichen Kontakts (**6**) in der Öffnung (**31**) des linken Teils (**18**) des umlaufenden Vorsprungs (**17**) und sein unterer Teil in der Aussparung (**10**) der Seitenwand (**9**) des Grundkörpers (**1**) geführt werden.

## Revendications

1. La poignée du téléphone portable avec les jonctions latéraux d'alimentation et/ou de signal, surtout pour un véhicule mécanique, équipé d'un boîtier composé de :
- support (**1**),
- couvercle (**2**),
- le coulisseau (**5**) encastré d'une manière déplaçante dans le boîtier et lié au bouton déclencheur (**13**) saillant du boîtier et avec le boîtier (**11**) de la broche latérale d'alimentation et/ou de signal (**6**), sachant que le boîtier (**11**) est encastré d'une manière déplaçante dans un trou (**31**) du couvercle (**2**),
**caractérisée par le fait que** son coulisseau (**5**)
est encastré d'une manière déplaçante, perpendiculairement à un axe de la poignée, entre la surface intérieure du couvercle (**2**) et la surface plate de guidage (**19**) d'une plaque de guidage (**3**),
lié au boîtier (**11**) de la broche latérale (**6**) d'alimentation et/ou de signal, équipé des encoches de blocage (**34**) qui sont adaptées au fonctionnement avec les saillies (**33**) des dents-de-loup de crochet (**4**) encastrés d'une manière inclinée dans les saillies de roulement (**22**) de la plaque de guidage (**3**),
possède un orifice (**35**) dans lequel un premier ressort enroulé de dilatation est encastré (**29**),
et **par le fait que** le bouton déclencheur (**13**) saillit à côté opposé au boîtier (**11**).

2. La poignée, selon la revendication 1, **caractérisée par le fait que** la plaque guidant (**3**), fixée au couvercle (**2**) et ayant une surface guidant plate (**19**), est équipée de :
la première partie abaissée (**21**) avec les saillies (**22**) exercant une fonction des roulements pour les dents-de-loup de crochet (**4**) encastrés dans ces saillies (**22**) d'une manière inclinée,
la deuxième partie abaissée (**30**) ayant les surfaces guidant adaptées à guider un bouton déclencheur (**13**) et
l'orifice (**28**) dans lequel un premier ressort enroulé de dilatation est encastré (**29**).

3. La poignée, selon la revendication 1 ou 2, **caractérisée par le fait que** d'un côté de l'orifice (**28**) de la plaque guidant (**3**) se trouve une cheville sur laquelle un bout enroulé de dilatation (**29**) est encastré, par contre, à l'opposé de l'orifice (**35**) du coulisseau (**5**), se trouve un autre cheville (**36**) sur laquelle le deuxième bout de ce ressort (**29**) est encastré.

4. La poignée, selon la revendication 1, **caractérisée par le fait que** le boîtier (**11**) de la broche latérale (**6**) est jointe avec le coulisseau (**5**) à l'aide d'un bras (**37**).

5. La poignée, selon la revendication 1, **caractérisée par le fait que** l'axe de l'orifice (**35**) du coulisseau (**5**) s'accorde avec un axe du bouton déclencheur (**13**).

6. La poignée, selon la revendication 1, **caractérisée par le fait que** le couvercle (**2**) est équipé, dans sa partie inférieure, d'une saillie (**17**) l'entourant, dont la partie gauche (**18**) est élargie et équipée d'un trou (**31**) dans lequel le boîtier (**11**) de la broche latérale (**6**) est passé.

7. La poignée, selon la revendication 1, **caractérisée par le fait que** le couvercle (**2**) est équipé, dans sa partie supérieure, des fentes (**32**) par lequelles sont passés les dents-de-loup de crochet (**4**).

8. La poignée, selon la revendication 1, **caractérisée par le fait que** la partie supérieure du boîtier (**11**) de la broche latérale (**6**) est passée par le trou (**31**) d'une partie gauche (**18**) de la saillie l'entourant (**17**), par contre, sa partie inférieure dans l'encoche (**10**), dans une paroi latérale (**9**) du support (**1**).
